(19) Europäisches Patentamt
European Patent Office
Office européen des brevets

(11) **EP 1 254 934 B1**

(12) **EUROPÄISCHE PATENTSCHRIFT**

(45) Veröffentlichungstag und Bekanntmachung des Hinweises auf die Patenterteilung:
**19.08.2015   Patentblatt 2015/34**

(21) Anmeldenummer: **02016458.8**

(22) Anmeldetag: **26.05.1997**

(51) Int Cl.:
**C08G 18/78** (2006.01)          **C09D 133/06** (2006.01)
**C09D 161/32** (2006.01)

(54) **Nicht-wässriger Lack**

Nonaqueous coating

Compositions non-aqueuses de revêtement

(84) Benannte Vertragsstaaten:
**AT BE CH DE DK ES FI FR GB GR IT LI NL PT SE**

(30) Priorität: **07.06.1996   DE 19622878**

(43) Veröffentlichungstag der Anmeldung:
**06.11.2002   Patentblatt 2002/45**

(62) Dokumentnummer(n) der früheren Anmeldung(en) nach Art. 76 EPÜ:
**97925944.7 / 0 843 706**

(73) Patentinhaber: **BASF Coatings GmbH**
**48165 Münster (DE)**

(72) Erfinder:
• **Röckrath, Ulrike**
  **48308 Senden (DE)**
• **Baumgart, Hubert**
  **48162 Münster (DE)**

(74) Vertreter: **Leifert & Steffan**
**Patentanwälte**
**Burgplatz 21-22**
**40213 Düsseldorf (DE)**

(56) Entgegenhaltungen:
**EP-A- 0 604 922       WO-A-96/34905**
**US-A- 4 939 213       US-A- 5 084 541**

EP 1 254 934 B1

**Beschreibung**

Die vorliegende Erfindung betrifft nicht-wäßrige Lacke.

Aus dem Stand der Technik Ist ein Verfahren zur Herstellung einer zwelschichtigen Lackierung bekannt, bei dem

(1) ein pigmentierter Basislack auf die Substratoberfläche aufgebracht wird
(2) aus dem in Stufe (1) aufgebrachten Basislack ein Polymerfilm gebildet wird
(3) auf der so erhaltenen Basislackschicht ein nicht-wäßriger transparenter Decklack aufgebracht wird und anschließend
(4) Basislackschicht und Decklackschicht zusammen eingebrannt werden.

Die Erfindung betrifft auch für dieses Verfahren geeignete nicht-wäßrige Lacke.

Das oben beschriebene basecoat/clearcoat-Verfahren wird vor allem zur Herstellung von mehrschichtigen Lackierungen, Insbesondere Metalleffektlackierungen auf Automobilkarosserien eingesetzt (vgl. z.B. US-A-3,639,147 und EP-A-38 127).

Mit dem basecoat/clearcoat-Verfahren sind Lackierungen herstellbar, die sich Im Vergleich zu einschichtigen Decklackierungen durch eine verbesserte Effektgebung und durch die Möglichkeit, Lackierungen mit leuchtenden und reineren Farbtönen herzustellen, auszeichnen.

Der in Stufe (1) vorlackierte Basislack bestimmt, je nach Art, Menge und räumlicher Orientierung der eingesetzten Pigmente, den Farbton und gegebenenfalls den Effekt (z.B. Metalleffekt oder Perlglanzeffekt) der Lackierung.

In Stufe (2) des Verfahrens werden dem in Stufe (1) aufgebrachten Basislackfilm in einer Abdunstphase wenigstens ein Teil der organischen Lösemittel bzw. wenigstens ein Teil des Wassers entzogen. Auf diese vorgetrocknete, aber nicht eingebrannte Basislackschicht wird in Stufe (3) ein nicht-wäßriger transparenter Decklack aufgebracht (Naß-in-Naß-Verfahren) und in Stufe (4) werden dann Basislackschicht und Decklackschicht zusammen eingebrannt.

Der in Stufe (3) aufgebrachte transparente Decklack verleiht der Zweischichtlackierung Glanz und Fülle und schützt die in Stufe (1) aufgebrachte pigmentierte Lackschicht vor chemischen und physikalischen Angriffen.

Mit dem in Rede stehenden Verfahren können nur dann qualitativ hochwertige Zweischichtlackierungen erhalten werden, wenn der in Stufe (3) aufgebrachte transparente Decklack die in den Stufen (1) und (2) aufgebrachte Basislackschicht nicht so stört, daß es zu einer Verschlechterung des optischen Effektes (z.B. Wolkenbildung) kommt. Andererseits muß der transparente Decklack so zusammengesetzt sein, daß er nach dem in Stufe (4) durchgeführten Einbrennprozeß auf der Basislackschicht gut haftet. Weitere wichtige Eigenschaften, die die nach dem Einbrennprozeß erhaltene transparente Decklackschicht aufweisen muß, sind hohe Transparenz, guter Glanz und gute mechanische Eigenschaften, wie Härte, Kratzfestigkeit und Elastizität. Nicht zuletzt muß die nach dem Einbrennprozeß erhaltene transparente Decklackschicht eine hohe Widerstandsfähigkeit gegen klimatische Einflüsse (z.B. Temperaturschwankungen, Feuchtigkeit in Form von Wasserdampf, Regen, Tau, Belastung durch Strahlung usw....) und gegen Angriffe durch Säuren oder andere Chemikalien, wie z.B. organische Lösemittel aufweisen. Außerdem sollen die in Stufe (3) aufgebrachten transparenten Decklacke einen möglichst niedrigen Gehalt an organischen Lösemitteln und eine gute Lagerstabilität aufweisen.

In der JP-A-2-242867 wird ein basecoat/clearcoat-Verfahren beschrieben, bei dem in Stufe (3) nicht-wäßrige transparente Decklacke aufgebracht werden, die (A) ein hydroxylgruppenhaltiges Kunstharz, (B) ein Aminoplastharz und (C) ein blockiertes Polyisocyanat enthalten, wobei die Komponenten (B) und (C) so auszuwählen sind, daß die Temperatur, bei der eine chemische Reaktion zwischen (A) und (C) einsetzt, höchstens 20°C unter und höchstens 50°C über der Temperatur, bei der eine chemische Reaktion zwischen (A) und (B) einsetzt, liegen soll.

Als Blockierungsmittel zur Herstellung der Komponente (C) werden genannt: Flüchtige, niedermolekulare, aktive Wasserstoffatome aufweisende Verbindungen, wie Methanol, Ethanol, Propanol, Butanol, Hexanol, Cyclohexanol, Benzylalkohol, Ethylenglykolmonoethylether und andere aliphatische oder aromatische Monoalkohole, Dimethyl- oder Diethylaminoethanol und andere hydroxylgruppenhal-tige tertiäre Amine, Acetonoxim, Methylethylketonoxim und andere Oxime, Acetylaceton, Acetessigsäureester, Malonsäureester und andere aktive Methylengruppen enthaltende Verbindungen, ε-Caprolactam und andere Lactame und Phenol. Als Blockierungsmittel werden vorzugsweise aliphatische Monoalkohole, Oxime und Caprolactame eingesetzt.

Die in der JP-A-2-242867 beschriebenen transparenten Decklacke liefern Lackierungen, die insbesondere hinsichtlich der Beständigkeit gegen organische Lösermittel und Säuren, Glanz, Transparenz und Resistenz gegenüber Vergilbung verbessert werden sollten.

In der DE-B-26 39 491 werden nicht-wäßrige Lacke beschrieben, die ein hydroxylgruppenhaltiges Polyester-und/oder Alkydharz, mit einem Acetessigsäueralkylester blockiertes Hexamethylendiisocyanat und/oder mit einem Acetessigsäurealkylester blockiertes 2,2,4 Trimethylhexamethylendiisocyanat und ein Aminoplastharz enthalten. Diese Lacke können auch als transparente Decklacke Im Bereich der Kraftfahrzeuglackierung eingesetzt werden. Mit diesen Lacken werden Lackierungen erhalten, die insbesondere bei Anwendung von erhöhten Einbrenntemperaturen und/oder verlängerten Einbrennzeiten vergilben und die insbesondere hinsichtlich der Beständigkeit gegenüber Säuren und organischen Lösemitteln sowie hinsichtlich der Kratzbeständigkeit verbessert werden sollten.

Eine Verbesserung der Eigenschaften der Lacke läßt sich durch den Einsatz spezieller Vernetzungsmittel erreichen, Hier sind insbesondere die aus den US-PS 5084541, 4939213, 5288865, 4710542 und den EP-Anmeldungen 0565774, 0541966, 0604922 und der EP-PS 0245700 bekannten Tris(Alkoxycarbonylamino)Triazine und deren Derivate zu nennen. Derartige Lacke zeichnen sich durch eine besonders gute Chemikalienfestigkeit aus, die sich in besonderer Weise in guten Ergebnissen bei der Freibewitterung in der Jacksonville/Florida zeigt. Die engmaschige Vernetzung solcher Formulierungen hat jedoch den Nachteil der erhöhten Empfindlichkeit gegenüber Feuchtigkeitsbelastungen, die sich in einem Weißanlaufen der Lackschichten nach derartigen Belastungen äußert.

Aufgabe der vorliegenden Erfindung ist es nunmehr, einen nicht-wässrigen Lack für ein Verfahren zur Herstellung einer mehrschichtigen Lackierung zur Verfügung zu stellen, bei dem ein

(1) ein ggfs. pigmentierter Basislack auf eine Substratoberfläche aufgebracht wird,
(2) aus der in Stufe (1) aufgebrachten Basislackschicht ein Polymerfilm gebildet wird,
(3) ggfs. hierauf ein oder mehrere weitere Lackschichten aufgetragen werden,
(4) sodann ein nicht-wäßriger Decklack aufgebracht wird, der

A) ein hydroxyfunktionelles Polyacrylatharz,
B) als Vernetzungsmittel Tris(alkoxycarbonylamino)Triazin und
C) ggfs. weitere Vernetzungsmittel, wie blockierte Isocyanate, die verschieden von dem Tris(alkoxycarbonylamino)Triazin sind, und/oder Aminoplastharze enthält,

und anschließend
(5) die Lackschichten zusammen eingebrannt werden, welches zu Lackschichten führt,
die sowohl bei der Freibewitterung in Jacksonville als auch bei Feuchtigkeitsbelastungen zu guten Ergebnissen führt.

Diese Aufgabe wird dadurch gelöst, daß das Polyacrylatharz sekundäre OH-Gruppen enthält, eine Hydroxylzahl von 100 bis 200 mg KOH/g und eine Säurezahl von 0 bis 35 mg KOH/g, eine Glasübergangstemperatur von -35 bis +70 °C und ein zahlenmittleres Molekulargewicht von 1500 bis 30000 g/mol aufweist.

Hierin beschrieben wird demgemäß auch eine mehrschichtige Lackierung, enthaltend

(1) eine Schicht eines Polymerfilms eines ggfs. pigmentierten Basislacks, der auf eine Substratoberfläche aufgebracht ist,
(2) ggfs. ein oder mehrere hierauf aufgebrachte Lackschichten,
(3) eine Schicht eines nicht-wäßrigen Decklacks, der

A) ein hydroxyfunktionelles Polyacrylatharz,
B) als Vernetzungsmittel Tris(alkoxycarbonylamino)Triazin und
C) ggfs. weitere Vernetzungsmittel, wie blockierte isocyanate, die verschieden von
dem Tris(alkoxycorbonylamino)Triazin sind, und/oder Aminoplastharze enthält

und anschließend
(4) die Lackschichten zusammen eingebrannt werden.
dadurch gekennzeichnet, daß das Polyacrylatharz sekundäre OH-Gruppen enthält, eine Hydroxylzahl von 100 bis 200 mg KOH/g und eine Säurezahl von 0 bis 35 mg KOH/g, eine Glasübergangstemperatur von -35 bis +70 °C und ein zahlenmittleres Molekulargewicht von 1500 bis 30000 g/mol aufweist.

Die Erfindung hat einen nicht-wäßrigen Lack zum Gegenstand, enthaltend

A) ein hydroxyfunktionelles Polyacrylatharz,
B) als Vernetzungsmittel Tris(alkoxycarbonylamino)Triazin und
C) ggfs. weitere Vernetzungsmittel, wie blockierte Isocyanate, die verschieden von dem Tris(alkoxycarbonylamino)Triazin sind, und/oder Aminoplastharze

dadurch gekennzeichnet, daß das Polyacrylatharz (A) sekundäre OH-Gruppen enthält, eine Hydroxylzahl von 100 bis 200 mg KOH/g und eine Säurezahl von 0 bis 35 mg KOH/g, eine Glasübergangstemperatur von -35 bis +70 °C und ein zahlenmittleres Molekulargewicht von 1500 bis 30000 g/mol aufweist.

Hierin wird auch die Verwendung des genannten nicht-wäßrigen Lackes zur Herstellung von transparenten Decklacken und die Verwendung der mehrschichtigen Lackierung zur Beschichtung von Automobilkaroserien beschrieben.

Die nach dem obigem Verfahren hergestellten Mehrschichtlacklerungen zeichnen sich durch hohe Härte, hohen Glanz, gute Haftung zwischen Basislackschicht und Decklackschicht, guten Decklackstand, gute Kratzbeständigkeit und gute Beständigkeit gegen klimatische Einflüsse, organische Lösemittel und Säuren sowie hohe Resistenz gegenüber Vergilbung (insbesondere gegen Vergilbung die infolge von hohen Einbrenntemperaturen und/oder infolge von langen Einbrennzeiten auftritt) aus. Diese guten Eigenschaften werden auch bei Verwendung unterschiedlicher Basislacke erhalten. Die eingesetzten transparenten Decklacke zeichnen sich außerdem durch hohe Lagerstabilität aus und können auch mit einem niedrigen Gehalt (z.B. kleiner als 50 Gew.-%) an organischen Lösemitteln gut verarbeitet werden. Insbesondere zeichnen sich die erfindungsgemäßen Lacke durch eine gute Beständigkeit gegenüber den speziellen Bewitterungseinflüssen in der Jacksonville-Auslage und eine geringe Empfindlichkeit gegenüber einer Feuchtigkeitsbelastung aus. Demzufolge ist das sonst zu beobachtende Weißanlaufen der Lackschichten bei der vorliegende Erfindung nicht zu verzeichnen.

In der Stufe (1) des Verfahrens können im Prinzip alle zur Herstellung von zweischichtigen Lacklerungen geeigneten pigmentierten Basislacke eingesetzt werden. Derartige Basislacke sind dem Fachmann gut bekannt Es können sowohl wasserverdünnbare Basislacks als auch Basislacke auf Basis von organischen Lösemitteln eingesetzt werden. Geeignete Basislacke werden beispleisweise beschrieben in der US-A-3,639,147, DE-A-33 33 072, DE-A-38 14 853, GB-A-2 012 191, US-A-3,953,644, EP-A-260 447, DE-A-39 03 804, EP-A-302 552, DE-A-36 28 124, US-A-4,719,132, EP-A-297 576, EP-A-69 936, EP-A-89 497, EP-A-195 931, EP-A-228 003, EP-A-38 127 und DE-A-28 18100. In diesen Patentdokumenten sind auch weitere Informationen über das in Rede stehende basecoat/clearcoat-Verfahren zu finden.

In Stufe (2) des Verfahrens werden dem in Stufe (1) applizierten Basislack in einer Abdunstphase die Lösemittel bzw. das Wasser entzogen. Die Basislackschicht kann auch eingebrannt werden. Das ist aber aus ökonomischen Gründen nachteilig, weil dann zur Herstellung der Mehrschichtlacklerung mehrere Einbrennvorgänge anstelle von einem Einbrennvorgang benötigt werden.

In der Stufe (3) des Verfahrens werden vorzugsweise transparente nicht-wäßrige Lacke eingesetzt.

Hydroxylgruppenhaltige Polyacrylatharze sind gut bekannt. Beispiele für solche Harze und deren Herstellung werden beispielsweise in der JP-A-2-24 28 67, DE-B-26 39 491 sowie In den auf Seite 6 In den Zellen 31 bis 36 genannten Patentdokumenten beschrieben.

In dem Verfahren werden vorzugsweise als Komponente (A) Polyacrylatharze eingesetzt, die Säurezahlen von 0 bis 23, besonders bevorzugt 3,9 bis 15,5, Glasübergangstemperaturen von -20 bis +40 °C, besonders bevorzugt -20 bis +15 °C und zahlenmittlere Molekulargewichte von 2000 bis 15000, besonders bevorzugt 2500 bis 5000 aufweisen.

Als Komponente (A) werden besonders bevorzugt Polyacrylatharze eingesetzt, die herstellbar sind, Indem

(a) 10 bis 92, vorzugsweise 20 bis 70 Gew.-% eines Alkyl- oder Cycloalkylacrylates oder eines Alkyl-oder Cycloalkylmethacrylates mit 1 bis 18, vorzugsweise 4 bis 13 Kohlenstoffatomen Im Alkyl- bzw. Cycloalkylrest oder Mischungen aus solchen Monomeren
(b) 8 bis 60, vorzugsweise 12,5 bis 51 Gew.-% eines Hydroxyalkylacrylates oder eines Hydroxylalkylmethacrylates mit 2 bis 4 Kohlenstoffatomen im Hydroxyalkylrest oder Mischungen aus solchen Monomeren, wobei die Gesamtmenge der hydroxyfunktionellen Acrylate oder Methacrylate aus 10 bis 90 Gew.-%, vorzugsweise 20 bis 80 hydroxyfunktionellen Acrylaten oder Methacrylaten mit primären OH-Gruppen und 90 bis 10 Gew.-%, vorzugsweise 20 bis 80 Gew.-% hydroxyfunktionellen Acrylaten oder Methacrylaten mit sekundären OH-Gruppen kombiniert wird,
(c) 0,0 bis 5,0, vorzugsweise 0,0 bis 3,0 Gew.-% Acrylsäure oder Methacrylsäure oder Mischungen aus diesen Monomeren und
(d) 0 bis 50, vorzugsweise 0 bis 40 Gew.-% von (a), (b) und (c) verschiedene, mit (a), (b) und (c) copolymerisierbare ethylenisch ungesättigte Monomere oder Mischungen aus solchen Monomeren umgesetzt werden.

Ganz besonders bevorzugt werden Polyacrylatharze, die herstellbar sind, indem

(a) 20 bis 60 eines Alkyl- oder Cycloalkylacrylates oder eines Alkyl- oder Cycloalkylmethacrylates mit 1 bis 18, vorzugsweise 4 bis 13 Kohlenstoffatomen im Alkyl- bzw. Cy-cloalkylrest oder Mischungen aus solchen Monomeren
(b) 20 bis 41 Gew.-% eines Hydroxylalkylacrylates oder eines Hydroxylalkylmethacrylates mit 2 bis 4 Kohlenstoffatomen im Hydroxyalkylrest

oder Mischungen aus solchen Monomeren, wobei die Gesamtmenge der hydroxyfunktionellen Acrylate oder Methacrylate aus 25 bis 50 Gew.-% hydroxyfunktionellen Acrylate oder Methacrylaten mit primären OH-Gruppen und 75 bis 50 Gew.-% hydroxyfunktionellen Acrylaten oder Methacrylaten mit sekundären OH-Gruppen kombiniert wird, (c) 0,5 bis 2 Gew.-% Acrylsäure oder Methacrylsäure oder Mischungen aus diesen Monomeren und

(d) 0 bis 30 Gew.-% von (a), (b) und (c) verschiedene, mit (a), (b) und (c) copolymerisierbare ethylenisch ungesättigte Monomere oder Mischungen aus solchen

Monomeren umgesetzt werden.

Als Beispiele für (a)-Komponenten werden genannt:
Methyl-, Ethyl-, Propyl-, n-Butyl-, Isobutyl-, tert.-Butyl-, Pentyl-, Hexyl-, Heptyl-und 2-Ethyl-hexylacrylat bzw. -methacrylat sowie Cyclohexylacrylat und Cyclohexylmethacrylat.

Als Beispiele für (b)-Komponenten mit primären OH-Gruppen werden genannt:
2-Hydroxyethylacrylat, 2-Hydroxyethylmethacrylat, 4-Hydroxybutylacrylat, 4-Hydroxybutylmethacrylat sowie deren Addukte mit E-Caprolacton;

als Beispiele für (b)-Komponenten mit sekundären OH-Gruppen werden genannt:
2-Hydroxypropylacrylat, 2-Hydroxypropylmethacrylat sowie die Addukte von Acrylsäure und Methacrylsäure mit dem Glycidylester der Versaticsäure.

Als Beispiele für (d)-Komponenten werden genannt:
Vinylaromaten, wie beispielsweise Styrol, Vinyltoluol, $\alpha$-Methylstyrol, $\alpha$-Ethylstyrol, kernsubstituierte Di-ethylstyrole, Isopropylstyrol, Butylstyrole und Methoxystyrole; Vinylether, wie beispielsweise Ethylvinylether, n-Propylvinylether, Isopropylvinylether, n-Butylvinylether und Isobutylvinylether und Vinylester, wie beispielsweise Vinylacetat, Vinylpropionat, Vinylbutyrat, Vinylpivalat und der Vinylester der 2-Methyl-2-ethylheptansäure.

Die Hydroxylzahl und die Säurezahl der Polyacrylatharze kann der Fachmann problemlos durch die Menge an eingesetzter Komponente (b) bzw. (c) steuern.
Die Glasübergangstemperatur der Polyacrylatharze wird durch Art und Menge der eingesetzten Monomere bestimmt. Die Auswahl der Monomeren kann vom Fachmann unter Zuhilfenahme der folgenden Formel, mit der die Glasübergangstemperaturen von Polyacrylatharzen näherungsweise berechnet werden können, vorgenommen werden:

$$\frac{1}{T_G} = \sum_{n=1}^{n=x} \frac{W_n}{T_{Gn}}$$

$T_G$ =      Glasübergangstemperatur des Polyacrylatharzes
x =      Anzahl der im Polyacrylatharz einpolymerisierten verschiedenen Monomeren.
$W_n$ =      Gewichtsanteil des n-ten Monomers
$T_{Gn}$ =      Glasübergangstemperatur des Homopolymers aus dem n-ten Monomer

Maßnahmen zur Steuerung des Molekulargewichtes (z.B. Auswahl entsprechender Polymerisationsinitiatoren, Einsatz von Kettenübertragungsmitteln usw.) gehören zum Fachwissen des Durchschnittsfachmanns und müssen hier nicht näher erläutert werden.

Als Komponente (A) können auch Gemische der beschriebenen Polyacrylatharze mit anderen Kunstharzen eingesetzt werden. Beispiele sind Polyesterharze bzw. Alkydharze, die herstellbar sind, indem

($\alpha$) eine cycloaliphatische oder aliphatische Polycarbonsäure oder eine Mischung aus solchen Polycarbonsäuren
($\beta$) ein aliphatisches oder cycloaliphatisches Polyol mit mehr als zwei Hydroxylgruppen im Molekül oder eine Mischung aus solchen Polyolen
($\gamma$) ein aliphatisches oder cycloaliphatisches Diol oder eine Mischung aus solchen Diolen und
($\delta$) eine aliphatische lineare oder verzweigte gesättigte Monocarbonsäure oder eine Mischung aus solchen Monocarbonsäuren in einem molaren Verhältnis von ($\alpha$): ($\beta$) : ($\gamma$) : ($\delta$) = 1,0 : 0,2 - 1,3 : 0,0 - 1,1: 0,0 - 1,4, vorzugsweise 1,0 : 0,5 - 1,2 : 0,0 - 0,6 : 0,2 - 0,9 zu einem Polyesterharz bzw. Alkydharz umgesetzt werden.

Als Beispiele für die Komponente ($\alpha$) werden genannt: Hexahydrophtalsäure, 1,4-Cyclohexandicarbonsäure, Endomethylentetrahydrophtalsäure, Oxalsäure, Malonsäure, Bernsteinsäure, Glutarsäure, Adipinsäure, Pimelinsäure, Korksäure, Azelainsäure und Sebacinsäure.

Als Beispiele für die Komponente ($\beta$) werden genannt: Pentaerythrit, Trimethylolpropan, Trimethylolethan und Glycerin.

Als Beispiele für die Komponente ($\gamma$) werden genannt: Ethylenglykol, Diethylenglykol, Propylenglykol, Neopentylglykol, 2-Methyl-2-propylpropandiol-1,3,2-Ethyl-2-butylpropandiol-1,3, 2,2,4-Trimethylpentandiol-1,5, 2,2,5-Trimethylhexandiol-1,6, Hydroxypivalinsäureneo-pentylglykolester und Dimethylolcyclohexan.

Als Beispiele für die Komponente ($\delta$) werden genannt: 2-Ethylhexansäure, Laurinsäure, Isooctansäure, Isononansäure und Monocarbonsäuremischungen, die aus Kokosfett oder Palmkernfett gewonnen werden.

Die Herstellung von Hydroxylgruppen tragenden Polyester- und/oder Alkydharzen ist z.B. in Ullmanns Encyklopädie der technischen Chemie, dritte Auflage, 14. Band, Urban & Schwarzenberg, München, Berlin 1863, Seiten 80 bis 89 und Seiten 99 bis 105, in den Büchern: Résines Alkydes-Polyesters von J. Bourry, Paris Verlag Dunod 1952, Alkyd Resins von C.R. Martens, Reinhold Publishing Corporation, New York 1961 und Alkyd Resin Technology von T.C. Patton, Interscience Publishers 1962 beschrieben.

Als Komponente (B) werden Tris(Alkoxycarbonylamino)Triazine gemäß der US-PS 4 939 213, der US-PS 5 084 541 und der EP 0 624 577 eingesetzt. Ebenso können Derivate der genannten Verbindungen zum Einsatz kommen.

Die Tris(Alkoxycarbonylamino)Triazine und deren Derivate können erfindungsgemäß auch im Gemisch mit herkömmlichen Vernetzungsmitteln eingesetzt werden (Komponente C). Hier kommen insbesondere von den Tris(Alkoxycarbonylamino)Triazinen verschiedene blockierte Polyisocyanate in Betracht. Ebenso sind Aminoplastharze z.B. Melamine, einsetzbar.

Im Prinzip kann jedes für transparente Decklacke geeignete Aminoplastharz oder eine Mischung aus solchen Aminoplastharzen eingesetzt werden.

Derartige Harze sind dem Fachmann gut bekannt und werden von vielen Firmen als Verkaufsprodukte angeboten. Aminoplastharze sind Kondensationsprodukte aus Aldehyden, insbesondere Formaldehyd und beispielsweise Harnstoff, Melamin, Guanamin und Benzoguanamin. Die Aminoplastharze enthalten Alkohol-, vorzugsweise Methylolgruppen, die In der Regel teilweise oder vollständig mit Alkoholen verethert sind.

Als Komponente (C) werden vorzugsweise mit niedrigen Alkoholen, Insbesondere mit Methanol oder Butanol veretherte Melamin-Formaldehydharze eingesetzt.

Besonders bevorzugt werden mit niedrigen Alkoholen, insbesondere mit Methanol und/oder Butanol veretherte Melamin-Formaldehydharze, die im statistischen Mittel pro Triazinring noch 0,1 bis 0,25 an Stickstoffatome gebundene Wasserstoffatome enthalten, als Komponente (B) eingesetzt.

Die eingesetzten Decklacke können auch als Komponente (C) ein blockiertes Polyisocyanat oder eine Mischung aus blockierten Polyisocyanaten enthalten.

Prinzipiell können alle auf dem Lackgeblet einsetzbaren Polyisocyanate zur Herstellung der Komponente (C) eingesetzt werden. Es ist jedoch bevorzugt, Polyisocyanate einzusetzen, deren Isocyanatgruppen an aliphatische oder cycloaliphatische Reste gebunden sind, Beispiele für derartige Polyisocyanate sind Hexamethylendiisocyanat, isophorondiisocyanat, Trimethylhexamethylendiisocyanat, Dicyclohexylmethandiisocyanat und 1,3-Bis-(2-isocyanatopropyl-2-)benzol (TMXDI) sowie Addukte dieser Polyisocyanate an Polyole, insbesondere nieder-molekulare Polyole, wie z.B. Trimethylolpropan und von diesen Polyisocyanaten abgeleitete Isocyanuratgruppen- und/oder biuretgruppenhaltige Polyisocyanate. Als Polyisocyanate werden besonders bevorzugt Hexa-methylendiisocyanat und isophorondiisocyanat, von die-sen Diisocyanaten abgeleitete isocyanurat- oder blurot-gruppenhaltige Polylsocyanate, die vorzugsweise mehr als zwei isocyanatgruppen Im Molekül enthalten sowie Umsetzungsprodukte aus Hexamethylendiisocyanat und isophorondiisocyanat oder einer Mischung aus Hexamethylendiisocyanat und isophorondiisocyanat mit 0,3 - 0,5 Äquivalenten eines niedermolekularen Polyols mit einem Molekulargewicht von 62 bis 500, vorzugsweise von 104 bis 204, insbesondere eines Triols, wie zum Beispiel Trimethylolpropan, eingesetzt.

Als Blockierungsmittel können Dialkylmalonate oder eine Mischung aus Dialkylmalonaten eingesetzt werden.

Als Beispiele für einsetzbare Dialkylmalonate selen Dialkylmalonate mit je 1 bis 6 Kohlenstoffatomen in den Alkylresten genannt, wie z.B. Malonsäuredimethylester und Malonsäurediethylester, wobei Malonsäurediethyl-ester bevorzugt eingesetzt wird.

Weiterhin sind anders aktive Methylengruppen enthaltende Blockierungsmittel und Oxime sowie Mischungen aus diesen Blockierungsmitteln einsetzbar. Als Beispiele selen genannt: Acetessigsäuremethyl-, ethyl-, -propyl-, butyl-, -pentyl-, hexyl-, heptyl-, octyl-, nonyl-, -decyl- oder -dodecyl-ester, Acetonoxim, Methylethylketoxim, Acetylaceton, Formaldoxim, Acetaldoxim, Benzophenoxim, Acetoxim und Diisobutylketoxim.

Die Komponenten (A), (B) und (C) werden In den eingesetzten transparenten Decklacken Im allgemeinen in solchen Mengen eingesetzt, daß die Komponente (A) In einer Menge von 20 bis 80, vorzugsweise 30 bis 60 Gew.-%,

die Komponente (B) in einer Menge von 1 bis 50, vorzugsweise 5 bis 35 Gew.-% und die Komponente (C) in einer Menge von 0 bis 50, vorzugsweise 0 bis 35 Gew.-% vorhanden ist, wobei die Gewichtsprozentangaben auf (A) + (B) + (C) = 100 Gew.-% und auf den Feststoffanteil der Komponente (A), (B) und (C) bezogen sind.

Die eingesetzten transparenten Decklacke enthalten vorzugsweise keine bzw. nur transparente Pigmente. Als organische Lösemittel enthalten die Decklacke übliche zur Herstellung von Lacken gebräuchliche organische Lösemittel. Die Decklacke können außerdem noch weitere gebräuchliche Zusätze, wie z.B. Lichtschutzmittel, Verlaufshilfsmittel usw. enthalten.

Die mit den eingesetzten Decklacken hergestellten Mehrschichtlackierungen weisen die vorteilhaften Eigenschaften insbesondere auch dann auf, wenn sie unter den zur Zeit bei der Automobilserienlackierung angewandten Einbrennbedingungen (30 Minuten bei 130°C oder 20 Minuten bei 140°C) eingebrannt worden sind.

Die Erfindung wird in den folgenden Beispielen näher erläutert. Alle Mengen- und Prozentangaben sind, wenn nicht ausdrücklich etwas anderes festgestellt wird, als Gewichtsangaben zu verstehen.

Acrylatharz A (erfindungsgemäß)

In einem Labor-Reaktor mit einem Nutzvolumen von 4 l ausgestattet mit zwei Tropftrichtern für die Monomermischung resp. Initiatorlösung, Stickstoff-Einleitungsrohr, Thermometer und Rückflußkühler werden 731 g einer Fraktion aromatischer Kohlenwasserstoffe mit einem Siedebereich von 158 bis 172 °C eingewogen. Das Lösemittel wird auf 140 °C aufgeheizt. Nach Erreichen von 140 °C werden eine Monomermischung aus 458 g Ethylhexylmethacrylat, 183 g n-Butylmethacrylat, 214 g Styrol, 183 g 2-Hydroxyethylacrylat, 458 g 2-Hydroxypropylmethacrylat und 31 g Acrylsäure innerhalb von 4 Stunden, und eine Initiatorlösung von 153 g t-Butylperethylhexanoat in 92 g des beschriebenen aromatischen Lösemittels innerhalb von 4,5 Stunden gleichmäßig in den Reaktor dosiert. Mit der Dosierung der Monomermischung und der Initiatoranlösung wird gleichzeitig begonnen. Nach Beendigung der Initiatordosierung wird die Reaktionsmischung zwei weitere Stunden auf 140 °C gehalten und danach abgekühlt. Die resultierende Polymerlösung hat einen Feststoffgehalt von 65 % (bestimmt in einem Umluftofen 1 h bei 130 °C), eine Säurezahl von 17 und eine Viskosität von 24,5 dPas (gemessen an einer 60 %-igen Anlösung der Polymerlösung in dem beschriebenen aromatischen Lösemittel, unter Verwendung eines ICI-Platte-Kegel Viskosimeters bei 23 °C).

Acrylatharz B (Vergleichsbeispiel)

In einem Labor-Reaktor mit einem Nutzvolumen von 4 l ausgestattet mit zwei Tropftrichtern für die Monomermischung resp. Initiatorlösung, Stickstoff-Einleitungsrohr, Thermometer und Rückflußkühler werden 731 g einer Fraktion aromatischer Kohlenwasserstoffe mit einem Siedebereich von 158 bis 172 °C eingewogen. Das Lösemittel wird auf 140 °C aufgeheizt. Nach Erreichen von 140 °C werden eine Monomermischung aus 763 g Ethylhexylmethacrylat, 122 g n-Butylmethacrylat, 214 g Styrol, 397 g 4-Hydroxybutylacrylat und 31 g Acrylsäure innerhalb von 4 Stunden, und eine Initiatorlösung von 153 g t-Butylperethylhexanoat in 92 g des beschriebenen aromatischen Lösemittels innerhalb von 4,5 Stunden gleichmäßig in den Reaktor dosiert. Mit der Dosierung der Monomermischung und der Initiatoranlösung wird gleichzeitig begonnen. Nach Beendigung der Initiatordosierung wird die Reaktionsmischung zwei weitere Stunden auf 140 °C gehalten und danach abgekühlt. Die resultierende Polymerlösung hat einen Feststoffgehalt von 65 % (bestimmt in einem Umluftofen 1 h bei 130 °C), eine Säurezahl von 17 und eine Viskosität von 3,8 dPas (gemessen an einer 60 %-igen Anlösung der Polymerlösung in dem beschriebenen aromatischen Lösemittel, unter Verwendung eines ICI-Platte-Kegel Viskosimeters bei 23 °C).

Acrylatharz C (Vergleichsbeispiel)

In einem Labor-Reaktor mit einem Nutzvolumen von 4 l ausgestattet mit zwei Tropftrichtern für die Monomermischung resp. Initiatorlösung, Stickstoff-Einleitungsrohr, Thermometer und Rückflußkühler werden 731 g einer Fraktion aromatischer Kohlenwasserstoffe mit einem Siedebereich von 158 bis 172 °C eingewogen. Das Lösemittel wird auf 140 °C aufgeheizt. Nach Erreichen von 140 °C werden eine Monomermischung aus 546 g Ethylhexylmethacrylat, 183 g n-Butylmethacrylat, 214 g Styrol, 552 g 2-Hydroxyethylacrylat und 31 g Acrylsäure innerhalb von 4 Stunden, und eine Initiatorlösung von 153 g t-Butylperethylhexanoat in 92 g des beschriebenen aromatischen Lösemittels innerhalb von 4,5 Stunden gleichmäßig in den Reaktor dosiert. Mit der Dosierung der Monomermischung und der Initiatoranlösung wird gleichzeitig begonnen. Nach Beendigung der Initiatordosierung wird die Reaktionsmischung zwei weitere Stunden auf 140 °C gehalten und danach abgekühlt. Die resultierende Polymerlösung hat einen Feststoffgehalt von 65 % (bestimmt in einem Umluftofen 1 h bei 130 °C), eine Säurezahl von 19 und eine Viskosität von 19 dPas (gemessen an einer 60 %-igen Anlösung der Polymerlösung in dem beschriebenen aromatischen Lösemittel, unter Verwendung eines ICI-Platte-Kegel Viskosimeters bei 23 °C).

Tabelle 1

| | Acrylatharz A | Acrylatharz B | Acrylatharz C |
|---|---|---|---|
| EHMA[1) | 458 | 763 | 546 |
| nBMA[2) | 183 | 122 | 183 |
| Styrol | 214 | 214 | 214 |
| 2-HEA[3) | 183 | ---- | 552 |
| 4-HBA[4) | ---- | 397 | ---- |
| HPMA[5) | 458 | ---- | ---- |
| AS[6) | 31 | 31 | 31 |
| TBPEH[7) | 153 | 153 | 153 |

[1) 2-Ethylhexylmethacrylat

[2) n-Butylmethacrylat

[3) 2-Hydroxyethylacrylat

[4) 4-Hydroxybutylacrylat

[5) 2-Hydroxypropylmethacrylat

[6) Acrylsäure

[7) tert.-Butylperethylhexanoat

Herstellung der Klarlacke

Die Klarlacke werden hergestellt, indem man die Polyacrylatharzlösungen einwiegt, dann unter Rühren die in Tab. 2 angegebenen Mengen Triazinvernetzer, Lösemittel, UV-Adsorber, Radikalfänger und Verlaufsmittel zugibt und gut einrührt. Die erhaltenen Lacke werden ggfs. für die Applikation mit Xylol auf eine Viskosität von 23 sec (gemessen mit einem DIN-4 Becher bei 20 °C) eingestellt.

Tabelle 2

| | Klarlack A | Klarlack B | Klarlack C |
|---|---|---|---|
| Acrylatharz A | 55,0 | ----- | ---- |
| Acrylatharz B | ---- | 62,4 | ---- |
| Acrylatharz C | ---- | ---- | 55,0 |
| Triazinvemetzer[1) | 28,2 | 18,5 | 28,2 |
| UV-Absorber[2) | 0,8 | 0,9 | 0,8 |
| Radikalfänger[3) | 1,0 | 1,1 | 1,0 |
| Verlaufsmittel[4) | 1,5 | 1,7 | 1,5 |
| Benzin 180/210 | 6,0 | 6,8 | 6,0 |
| Xylol | 2,5 | 2,8 | 2,5 |
| Solvesso 150 | 7,1 | 6,0 | 6,0 |
| Weißanlaufen[5) | nein | nein | ja |
| Jacksonville Note[6) | 3,5 | 10 | 4 |

[1) Triazinvernetzer gemäß US 4939312, US5054541 (Cytec)

[2) handelsübliche UV-Absorber der Benztriazolklasse

[3) handelsüblicher Radikalfänger auf Basis eines sterisch gehinderten Amins

[4) handelsübliches Verlaufsmittel auf Basis eines Polydimethylsiloxans

[5) Weißanlaufen nach Feuchtigkeitsbelastung (240 h/40°C, 100 % rel. Luftfeuchte)

[6) Blechauslage in Jacksonville/Florida; Note 1 (gut) - 10 (schlecht)

**Patentansprüche**

1. Nicht-wässriger Lack enthaltend,

   A) ein hydroxyfunktionelles Polyacrylatharz und
   B) als Vernetzungsmittel Tris(alkoxycarbonylamino)triazin,

   **dadurch gekennzeichnet, dass**
   das Polyacrylatharz A) sekundäre Hydroxylgruppen enthält, eine Hydroxylzahl von 100 bis 200 mg KOH/g und eine Säurezahl von 0 bis 35 mg KOH/g, eine Glasübergangstemperatur von -35 bis +70 °C und ein zahlenmittleres Molekulargewicht von 1500 bis 30000 g/mol aufweist.

2. Nicht-wässriger Lack gemäß Anspruch 1, **dadurch gekennzeichnet, dass** das Polyacrylatharz A) ein zahlenmittleres Molekulargewicht von 2000 bis 15000 g/mol aufweist.

3. Nicht-wässriger Lack gemäß Anspruch 1 oder 2, **dadurch gekennzeichnet, dass** dieser weitere Vernetzungsmittel enthält.

4. Nicht-wässriger Lack gemäß Anspruch 3, wobei die Vernetzungsmittel blockierte Isocyanate sind, die verschieden von dem Tris(trialkoxycarbonyl-amino)triazin sind und/oder Aminoplastharze sind.

**Claims**

1. Non-aqueous coating material comprising

   A) a hydroxy-functional polyacrylate resin and
   B) tris(alkoxycarbonylamino)triazine as crosslinking agent,

   **characterized in that**
   the polyacrylate resin A) comprises secondary hydroxyl groups and has a hydroxyl number of 100 to 200 mg KOH/g and an acid number of 0 to 35 mg KOH/g, a glass transition temperature of -35 to +70°C and a number-average molecular weight of 1500 to 30 000 g/mol.

2. Non-aqueous coating material according to Claim 1, **characterized in that** the polyacrylate resin A) has a number-average molecular weight of 2000 to 15 000 g/mol.

3. Non-aqueous coating material according to Claim 1 or 2, **characterized in that** it comprises further crosslinking agents.

4. Non-aqueous coating material according to Claim 3, the crosslinking agents being blocked isocyanates which are different from the tris(alkoxy-carbonylamino)triazine and/or are amino resins.

**Revendications**

1. Laque non aqueuse, contenant

   A) une résine de polyacrylate à fonction hydroxy et
   B) en tant qu'agent de réticulation, de la tris(alcoxycarbonylamino)triazine,

   **caractérisée en ce que**
   la résine de polyacrylate A) contient des groupes hydroxyle secondaires, présente un indice hydroxyle de 100 à 200 mg KOH/g et un indice d'acidité de 0 à 35 mg KOH/g, une température de transition vitreuse de -35 à +70 °C, et un poids moléculaire moyen en nombre de 1 500 à 30 000 g/mol.

2. Laque non aqueuse selon la revendication 1, **caractérisée en ce que** la résine de polyacrylate A) présente un poids moléculaire moyen en nombre de 2 000 à 15 000 g/mol.

3. Laque non aqueuse selon la revendication 1 ou 2, **caractérisée en ce que** celle-ci contient des agents de réticulation supplémentaires.

4. Laque non aqueuse selon la revendication 3, dans laquelle les agents de réticulation sont des isocyanates bloqués, qui sont différents de la tris(alcoxycarbonylamino)triazine et/ou qui sont des résines aminoplastes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3639147 A
- EP 38127 A
- JP 2242867 A
- DE 2639491 B
- US PS5084541 A
- US 4939213 A
- US 5288865 A
- US 4710542 A
- EP 0565774 A
- EP 0541966 A
- EP 0604922 A
- EP PS0245700 A
- DE 3333072 A
- DE 3814853 A
- GB 2012191 A
- US 3953644 A
- EP 260447 A
- DE 3903804 A
- EP 302552 A
- DE 3628124 A
- US 4719132 A
- EP 297576 A
- EP 69936 A
- EP 89497 A
- EP 195931 A
- EP 228003 A
- DE 2818100 A
- US PS4939213 A
- EP 0624577 A
- US 4939312 A
- US 5054541 A

**In der Beschreibung aufgeführte Nicht-Patentliteratur**

- **URBAN ; SCHWARZENBERG.** Ullmanns Encyklopädie der technischen Chemie. vol. 14, 80-89
- **J. BOURRY.** Büchern: Résines Alkydes-Polyesters. Paris Verlag Dunod, 1952, 99-105
- **C.R. MARTENS.** Alkyd Resins. Reinhold Publishing Corporation, 1961
- **T.C. PATTON.** Alkyd Resin Technology. Interscience Publishers, 1962